# EUROPÄISCHE PATENTANMELDUNG

(11) **EP 4 568 259 A1**
(43) Veröffentlichungstag der Anmeldung: **11.06.2025**
(21) Anmeldenummer: 23214567.2
(22) Anmeldetag: 06.12.2023
(51) Int. Cl.: H04N 21/44, H04N 21/466, H04N 21/81, H04N 21/84, H04N 21/845

(54) **VERFAHREN ZUR AUSWAHL EINER ZUSATZINFORMATION UND/ODER EINER POSITION IN EINER VIDEODATEI FÜR DIE DARSTELLUNG EINER ZUSATZINFORMATION**

(71) Anmelder: Hurra Communications GmbH, 70173 Stuttgart (DE)
(72) Erfinder: René, Schweier, 70599 Stuttgart (DE); Mikulski, Piotr, 30-103 Kraków (PL)
(74) Vertreter: Wörz, Volker Alfred

(57) **Zusammenfassung**

Um eine verbesserte Auswahl einer Zusatzinformation (11) und/oder einer Position in einer Videodatei (7) für die Darstellung einer Zusatzinformation (11) zu erreichen wird vorgeschlagen, dass der Zusatzinformation (11) mindestens eine erste Stimmungsinformation (12) zugeordnet ist, der Inhalt der Videodatei (7) zumindest teilweise hinsichtlich des Auftretens von mindestens einer weiteren Stimmungsinformation (10) untersucht wird, die Stimmungsinformation (10) mindestens einer Grundstimmung zugeordnet ist und eine Auswahl der darzustellenden Zusatzinformation (11) und/oder eine Auswahl einer Position zur Darstellung einer Zusatzinformation (11) in Abhängigkeit von dem Auftreten der weiteren Stimmungsinformation (10) erfolgt.

## Beschreibung

Die vorliegende Erfindung betrifft ein Verfahren zur Auswahl einer Zusatzinformation und/oder einer Position in einer Videodatei für die Darstellung einer Zusatzinformation.

Die Erfindung betrifft auch ein Client-Server System, das mit einem Kommunikationsnetzwerk verbindbar ist und Mittel zur Auswahl einer Zusatzinformation und/oder einer Position in einer Videodatei für die Darstellung einer Zusatzinformation aufweist.

Ein Client-Server System umfasst Clients und Server, die in Software und Hardware ausgebildet sein können und Informationen über ein Kommunikationsnetzwerk oder mehrere Kommunikationsnetzwerke austauschen. Ein Server ist beispielsweise so ausgebildet, dass er bestimmte Informationen oder Ressourcen, sogenannte Dienste, bereitstellt. Diese Dienste werden typischerweise von einem Client oder mehreren Clients in Anspruch genommen, indem Anfragen über das Kommunikationsnetzwerk, beispielsweise das Internet, an den Server gesendet werden. Der Server wertet eine eingehende Anfrage aus, überprüft gegebenenfalls eine Berechtigung des Clients zum Stellen der Anfrage und übermittelt der Anfrage entsprechende Informationen beziehungsweise stellt angeforderte Ressourcen zur Verfügung.

Der Server kann so ausgebildet sein, dass er seinerseits Anfragen an andere Server stellt, beispielsweise um Informationen zu erhalten, die er dann gegebenenfalls aufbereitet und den anfragenden Clients zur Verfügung stellt. In dieser Funktion agiert der Server folglich selbst als Client. Ebenso kann ein Client anderen Clients Informationen zur Verfügung stellen und agiert somit als Server.

Ein Server kann beispielsweise Videodaten bereithalten, die an einen Client in Form von sogenannten Videostreams übermittelt werden. Ein Client kann als eine auf einem Laptop, Tablet oder Smartphone ausführbare Software, beispielsweise als ein Internet-Browser, realisiert sein, mittels der ein empfangener Videostream auf einem Display dargestellt wird.

Videostreams können verschiedene Arten von Inhalten darstellen, wie z. B. Spielfilme, Video-Tutorials, TV-Sendungen, Werbespots, Live-Streams und so weiter. Häufig ist ein Videostream eine Abfolge verschiedener Arten von Inhalten, z. B. ein TV-Programm mit Werbepausen. Die Inhalte eines Videostreams können in Form eines TV-Programms von dem Server zusammengestellt und an einen anfragenden Client übertragen werden. Sogenannte Streaming Dienste ermöglichen es einem Client darüber hinaus, eine bestimmte Videodatei anzuwählen und den von dem Streaming Dienst empfangenen Videostream somit unabhängig von einem zeitlich vorgegebenen TV-Programm anzusehen.

Unabhängig davon, ob es sich um ein geplantes TV-Programm oder eine von einem Client zeitlich unabhängig anforderbare und als Videostream zu übertragende Videodatei handelt, werden häufig zusätzliche Informationen in den Videostream eingefügt - beispielsweise in Form von Werbespots - oder parallel zu dem Videostream an einen anderen Client des Benutzers übertragen. Derartige Zusatzinformationen können Hintergrundinformationen sein, die auf die Hauptinhalte eines Videostreams abgestimmt sind. Wird ein bestimmtes Produkt in einem Video dargestellt, so kann eine Hintergrundinformation ein Hinweis dazu sein, wo dieses Produkt erworben werden kann. Hintergrundinformationen können auch technische Informationen oder Hinweise zu weiterführenden Informationen sein. Insbesondere können Zusatzinformationen Werbespots sein, die den zugrundeliegenden Inhalt eines Videostreams in Form einer Werbepause unterbrechen oder die parallel zu einem empfangenen Videostream auf einem anderen Client des Benutzers dargestellt werden.

Werbespots können in unterschiedlichen Datenformaten über das Internet und/oder broadcast-fähige Kommunikationsnetzwerke übermittelt und von geeigneten Empfangsgeräten, wie beispielsweise Computern, Smartphones, Smart-TV und/oder HbbTV-fähigen Endgeräten empfangen werden. Werbespots beziehen sich regelmäßig auf mindestens ein Produkt, mindestens eine Dienstleistung, und/oder mindestens ein Unternehmen. Werbespots sind häufig relativ aufwändig erstellte kurze Videodateien und erzeugen beim Betrachter eine Stimmung, die von der dargestellten Szene und dem beworbenen Produkt beeinflusst wird.

Werbespots können hinsichtlich einer Mehrzahl von Kriterien optimiert werden, beispielsweise hinsichtlich der Sendezeit, der anvisierten Zielgruppe, des Inhalts oder deren Länge. Fernen kann eine Optimierung dadurch erfolgen, dass der Werbespot eine bestimmte Position innerhalb einer Werbeunterbrechung in einem TV-Programm erhält. Auch durch die Auswahl des TV-Programms selbst, innerhalb dessen der Werbespot gezeigt wird oder einer anderen, einem Nutzer dargestellten Information, während ein Werbespot übertragen wird, kann eine Optimierung des Werbespots erreicht werden. Eine Optimierung des Werbespots kann insbesondere auch die Position innerhalb des Videostreams betreffen, an der er dargestellt wird.

Oftmals wird die Darstellung von Zusatzinformationen, beispielsweise in Form von Werbeunterbrechungen, von den Benutzern des Clients, auf dem ein Videostream dargestellt wird, als unangenehm empfunden, was den prinzipiellen Mehrwert für den Benutzer einerseits und die Wirksamkeit des Werbespots (sogenannte Conversion) andererseits reduziert.

Aufgabe der vorliegenden Erfindung ist es, ein Verfahren und ein Client-Server System vorzuschlagen, das die Akzeptanz von darzustellenden Zusatzinformationen, insbesondere Werbespots, die innerhalb eines Videostreams als Werbeunterbrechung übertragen oder parallel zu einem Videostream gesendet werden, erhöht. Wenn im Verlaufe der weiteren Beschreibung der Erfindung die Begriffe Werbespot und Werbespots verwendet werden, so ist dies - falls sich aus dem Zusammenhang nichts anderes ergibt - stets so zu verstehen, dass dies analog auch für andere Arten von Zusatzinformationen gilt.

Die Aufgabe wird durch ein Verfahren der eingangs genannten Art dadurch gelöst, dass der Zusatzinformation mindestens eine erste Stimmungsinformation zugeordnet wird und der Inhalt der Videodatei bzw. des Videostreams zumindest teilweise hinsichtlich des Auftretens mindestens einer zweiten Stimmungsinformation untersucht wird (sog. Sentimentanalyse) und eine Auswahl der darzustellenden Zusatzinformation und/oder eine Auswahl einer Position zur Darstellung einer Zusatzinformation in Abhängigkeit von dem Auftreten der zweiten Stimmungsinformation erfolgt.

Im Rahmen der vorliegenden Erfindung bezeichnet eine Stimmungsinformation zumindest einen Aspekt einer Gesamtstimmung, die in einem Abschnitt des Videostreams, beispielsweise in einer Szene, für einen Betrachter des Videostreams emotional wahrnehmbar ist. Die Stimmungsinformation umfasst folglich mindestens eine Grundstimmung, wobei selbstverständlich mehrere Grundstimmungen innerhalb einer Szene in einem Video vorhanden sein können. Derartige Grundstimmungen können zum Beispiel als 'liebevoll', 'harmonisch', 'dramatisch', bedrohlich', 'freudvoll', etc. bezeichnet werden. Erfindungsgemäß wird eine Videodatei an zumindest einer Position oder zumindest in einem Abschnitt bezüglich des Vorliegens einer Grundstimmung analysiert und falls eine Grundstimmung erkannt wurde, wird diese als Stimmungsinformation der Videodatei zugeordnet und verwendet um festzustellen, welche Zusatzinformation in einem nachfolgenden Zeitfenster einem Benutzer dargestellt werden soll. Hierfür liegt mindestens eine Zusatzinformation vor, der ebenfalls mindestens eine Stimmungsinformation zugeordnet ist. Die mindestens eine Stimmungsinformation, die in der Videodatei erkannt wurde, wird dann mit der mindestens einen Stimmungsinformation, die der Zusatzinformation zugeordnet ist, verglichen. In Abhängigkeit von dem Ergebnis des Vergleichs sowie möglicherweise weiterer Parameter wird dann entschieden, ob und gegebenenfalls an welcher Stelle die Zusatzinformation einem Benutzer dargestellt wird.

Gemäß einer vorteilhaften Ausführungsform der Erfindung umfasst eine Stimmungsinformation zusätzlich zu der mindestens einen Grundstimmung eine Angabe über eine Intensität der Grundstimmung. Dies kann in Form eines numerischen Wertes erfolgen, bei der die Intensität beispielsweise mit einem Wert zwischen 0 und 10 angegeben wird um anzuzeigen, in welcher Intensität diese Grundstimmung vorliegt. Umfasst die Stimmungsinformation mehrere Grundstimmungen, so könnten diese beispielsweise in Form einer Menge von Wertepaaren realisiert werden, wobei jede an dieser Stelle oder in der betreffenden Szene identifizierte Grundstimmung durch ein Wertepaar dokumentiert wird, bei welcher einer der Werte die spezifische Grundstimmung repräsentiert und der zweite Wert des Wertepaars die Intensität der erkannten Grundstimmung darstellt. Ein Vergleich mehrerer Stimmungsinformationen ist auf diese Weise besonders einfach mit bekannten Mitteln möglich. Insbesondere können mit mathematischen Verfahren, wie sie beispielsweise aus der Kodierungstheorie bekannt sind, Ähnlichkeiten zwischen einzelnen Stimmungsinformationen bestimmt werden und es kann auf dieser Grundlage eine Auswahl der darzustellenden Zusatzinformation und/oder eine Auswahl einer Position zur Darstellung einer Zusatzinformation innerhalb eines Videostreams und/oder eine Auswahl eines Videostream zur Darstellung einer bestimmten Zusatzinformation erfolgen.

Eine vorteilhafte Ausführungsform der vorliegenden Erfindung, bei der eine Mehrzahl von Zusatzinformationen für eine mögliche Darstellung innerhalb oder parallel zu einer Darstellung der Videodatei bei einem Benutzer zur Verfügung stehen, sieht vor, dass jeder der Zusatzinformationen mindestens eine Stimmungsinformation zugeordnet wird, so dass die den Zusatzinformationen zugeordneten Stimmungsinformationen mit der in der Videodatei ermittelten mindestens einen weiteren Stimmungsinformation vergleichen werden können. Es wird dann zumindest diejenige Zusatzinformation für eine Darstellung bei einem Benutzer ausgewählt, deren Stimmungsinformation mit der mindestens einen weiteren, aus der Analyse der Videodatei ermittelten Stimmungsinformation übereinstimmt oder dieser am ähnlichsten ist.

Selbstverständlich ist es möglich, in bekannter Weise weitere Kriterien bei der Auswahl der Zusatzinformation heranzuziehen. Ist die Zusatzinformation ein Werbespot, so können beispielsweise eine Tageszeit, ein Genre oder Eigenschaften der Benutzer, die einen aktuellen Videostream ansehen, wie deren durchschnittliches Alter, die Berufe, die Freizeitinteressen, das Geschlecht und so weiter für die Auswahl eines Werbespots herangezogen werden.

Die vorliegende Erfindung schafft nun darüber hinaus ein Kriterium, das alleine oder in Kombination mit bereits bekannten Kriterien besonders vorteilhaft für die Auswahl eines Werbespots, der beispielsweise in einer Werbepause in einem Videostream dargestellt werden soll, herangezogen werden kann. Durch das erfindungsgemäße Verfahren wird erreicht, dass für den Betrachter des Videostreams ein emotional .weicherer' Übergang von dem Inhalt des Videostreams zu der Einblendung des Werbespots erfolgt. Das erhöht die Akzeptanz bei dem Betrachter und somit die Wahrscheinlichkeit, dass er sich diesen Werbespot, der nun bezüglich der Stimmung beispielsweise derjenigen Stimmung entspricht, die die der Werbepause vorausgegangene Szene bei dem Betrachter erzeugt hat, bis zum Ende ansieht und für ihn die so dargestellten Zusatzinformationen tatsächlich einen Mehrwert schaffen.

Auf Grundlage eines Vergleiches der Stimmungen in einem Videostream mit den Stimmungen, die darstellbaren Zusatzinformationen, beispielsweise einer Menge von Werbespots, die in Videostreams in Werbeunterbrechungen dargestellt werden sollen, zugeordnet sind, kann unter Verwendung des erfindungsgemäßen Verfahrens diejenige Werbeinformation ausgewählt werden, die am besten zu einer der Darstellung vorausgehenden Stimmung in dem Videostream passt. Ist in dem Video beispielsweise eine Szene gezeigt, in der sich ein Liebespaar küsst, so vermittelt dies die Emotionen von Liebe, Glück, Geborgenheit, etc. Gemäß dem erfindungsgemäßen Verfahren kann nun ein Werbespot ausgesucht werden, dessen zugeordnete Stimmungsinformation einer oder mehreren der Stimmungen entspricht, die in der Szene auftreten, bei der Analyse der Videodatei erkannt und in einer entsprechenden Stimmungsinformation abgespeichert worden sind.

Gemäß einer weiteren vorteilhaften Ausführungsform des erfindungsgemäßen Verfahrens wird eine Mehrzahl von Stimmungsinformationen zusammen mit Informationen bezüglich der Positionen ihres Auftretens innerhalb der Videodatei ermittelt. Die mindestens eine Zusatzinformation wird hinsichtlich der ihr zugeordneten mindestens einen Stimmungsinformation mit den in der Videodatei ermittelten Stimmungsinformationen vergleichen, und die Zusatzinformation wird in Abhängigkeit von derjenigen Position innerhalb der Videodatei für eine Darstellung bei einem Benutzer ausgewählt, an der die ermittelte Stimmungsinformation mit der mindestens einen der Zusatzinformation zugeordneten Stimmungsinformation übereinstimmt oder dieser am ähnlichsten ist. Diese Ausführungsform ermöglicht es, für einen innerhalb einer Videodatei darzustellenden Werbespot diejenige Position zu finden, die am besten der Stimmung entspricht, die durch den Werbespot bei dem Betrachter erzeugt wird.

Häufig sind mehr oder weniger feste Zeitrahmen für das Darstellen von Werbespots in einem Videostream vorgegeben. Mit dem erfindungsgemäßen Verfahren ist es nun möglich, einen bestimmten Werbespot innerhalb desjenigen Zeitrahmens darzustellen, der einer Szene folgt, deren Stimmung am ähnlichsten zu derjenigen Stimmung ist, die - möglicherweise neben anderen Stimmungen - von dem Werbespot bei einem Betrachter erzeugt wird.

Somit wird das Vorliegen mehrerer Stimmungsinformationen, die in der Videodatei erkannt wurden, dazu verwendet, diese Stimmungsinformationen mit der der dazustellenden Zusatzinformation zugeordneten Stimmungsinformation zu vergleichen, die Position derjenigen Stimmungsinformation innerhalb der Videodatei zu ermitteln, die am ähnlichsten zu der der Zusatzinformation zugeordneten Stimmungsinformation ist und den zeitlichen Beginn der Darstellung der Zusatzinformation in Abhängigkeit von der so ermittelten Position in der Videodatei zu bestimmen, was beispielsweise der darauffolgende Werbeblock sein kann.

Oftmals ist es vorgesehen, mehrere Zusatzinformationen unmittelbar aufeinander folgend darzustellen, wie dies beispielsweise von der Darstellung mehrerer Werbespots innerhalb einer Werbeunterbrechung bei TV-Sendungen bekannt ist. Eine weitere Möglichkeit, die Akzeptanz derartiger sogenannter Werbeblöcke zu erhöhen, wird dadurch erreicht, dass die letzte der innerhalb eines Blocks von unmittelbar aufeinander folgenden Zusatzinformationen darzustellende Zusatzinformation so ausgewählt wird, dass die ihr zugeordnete Stimmungsinformation die größte Ähnlichkeit zu derjenigen Stimmungsinformation in dem Videostrom aufweist, die dem Zeitfenster folgt. Somit wird ein für den Benutzer als angenehm wahrgenommener Übergang von den Werbespots zu dem eigentlichen Inhalt der Videodatei erreicht. Dadurch hat beispielsweise auch der letzte Werbespot in einer Reihe von innerhalb einer Werbeunterbrechung dargestellten Werbespots eine höhere Akzeptanz.

Gemäß einer weiteren vorteilhaften Ausführungsform, bei welcher ebenfalls davon ausgegangen wird, dass eine Mehrzahl von Zusatzinformationen unmittelbar aufeinander folgend für eine Darstellung innerhalb eines Blocks vorgesehen sind, wird eine Sortierung der unmittelbar aufeinander folgend darzustellenden Zusatzinformationen derart durchgeführt, dass die erste Zusatzinformation eine größte Ähnlichkeit zu einer ersten Stimmungsinformation hat, eine der letzten Zusatzinformation zugeordnete Stimmungsinformation die größte Ähnlichkeit zu einer nachfolgenden Stimmungsinformation in der Videodatei hat und - falls eine oder mehrere weitere Zusatzinformationen für eine Darstellung nach der ersten und vor der letzten Zusatzinformation innerhalb dieses Blockes vorgesehen sind - diese Zusatzinformationen derart sortiert sind, dass eine der jeweiligen Zusatzinformation zugeordnete Stimmungsinformation die größte Ähnlichkeit zu der jeweils vorangehenden und/oder der jeweils nachfolgenden Zusatzinformation hat.

Bei dieser Ausführungsform wird nicht nur erreicht, dass der Übergang von dem Inhalt der Videodatei zu einer dargestellten Zusatzinformation für den Benutzer als angenehmer empfunden wird, weil die beim Betrachten der Zusatzinformation erzeugte Stimmung eine wahrnehmbare Ähnlichkeit zu der Stimmung in einer vorausgegangenen Szene in der Videodatei hat, sondern es werden die innerhalb eines Werbeblocks darzustellenden Werbespots so sortiert, dass auch beim Übergang von einem Werbespot zu dem unmittelbar folgenden Werbespot eine wahrnehmbare Ähnlichkeit der dort jeweils auftretenden Stimmung erfolgt. Somit fügt sich die gesamte Folge von Werbespots harmonischer in die Videodatei ein und erhöht die Akzeptanz für einen Benutzer, sich Videostreams mit Werbeunterbrechungen anzusehen.

Zusammenfassend wird mit dem erfindungsgemäßen Verfahren erreicht, dass Werbespots, die innerhalb eines Videostreams dargestellt werden, von einem Betrachter als weniger störend empfunden werden, da ein vorgegebener Werbespot nun an einer Position innerhalb der Videodatei angezeigt werden kann, deren Stimmung eine hinreichend große Ähnlichkeit zu der Stimmung hat, die der Werbespot und vorzugsweise insbesondere die erste Szene eines Werbespots bei einem Betrachter des Werbespots erzeugt. Durch das Berücksichtigen des Einflusses der Stimmungen, die sowohl einzelne Szenen innerhalb einer Videodatei als auch darzustellende Werbespots bei einem Benutzter erzeugen, ist es nun sogar möglich, einen Werbeblock nicht nur hinsichtlich des ersten und des letzten Werbespots durch harmonische Übergänge in die Videodatei einzufügen, sondern den Werbeblock selbst hinsichtlich der Stimmungen bei den Übergängen von einem Werbespot zu dem nächsten Werbespot harmonischer zu gestalten, da zumindest einige und vorzugsweise alle Werbespots innerhalb eines Werbeblocks in einer bezüglich der jeweils erzeugten Stimmung harmonischen Reihenfolge sortiert und in dieser Reihenfolge dargestellt werden können.

Das erfindungsgemäße Erfahren schafft die Möglichkeit, ein besonders wichtiges, bisher vernachlässigtes Kriterium für die Auswahl der Zusatzinformation und/oder die Auswahl einer geeignete Position für die Darstellung der Zusatzinformation in einem Videostream oder parallel zur Darstellung des Inhaltes eines Videostreams heranzuziehen, wobei die parallele Darstellung insbesondere auf einem weiteren Endgerät, beispielsweise einem Smartphone oder einem Tablet, das dem jeweiligen Betrachter des Videostreams zugeordnet ist, erfolgt. Dieses weitere Kriterium berücksichtigt die Stimmungen, die einzelne Szenen in der Videodatei bei dem Betrachter auslösen und die Stimmungen, die in den als Zusatzinformationen, beispielsweise in Form von einzufügenden Werbespots, darzustellenden Szenen vorherrschen bzw. von einem Betrachter emotional wahrnehmbar sind. Es ist somit eine harmonische, hinsichtlich der dargestellten bzw. erzeugten Stimmungen optimierte Auswahl der darzustellenden Zusatzinformationen und/oder der Position für die Darstellung möglich. So kann zum Beispiel aus einer Menge von zur Verfügung stehenden Werbespots, die innerhalb eines oder mehrerer Videostreams eingeblendet werden sollen, entschieden werden, welcher Werbespot an welcher Position in welchem Videostream optimal hinsichtlich eines harmonischen Übergangs der jeweiligen Grundstimmung zu platzieren ist.

Das Darstellen einer Zusatzinformation unter Anwendung des erfindungsgemäßen Verfahrens ist selbstverständlich nicht auf ein Unterbrechen des ursprünglichen Videostreams und Darstellen der Zusatzinformation, beispielsweise als Werbeunterbrechung, oder das parallele Darstellen auf einem weiteren, einem Betrachter des Videostreams zugeordneten Endgerät beschränkt. Diese Arten der Darstellung sind lediglich exemplarisch und in keiner Weise beschränkend genannt. Weitere mögliche Formen der Darstellungen einer Zusatzinformation umfassen beispielsweise die sogenannten Überblendungen, bei denen der Inhalt des ursprünglichen Videostreams bzw. des ursprünglichen TV-Programms weiterhin angezeigt wird, jedoch auf einem bestimmten Bereich der Darstellungsfläche des Displays nun zusätzlich die Zusatzinformation dargestellt wird. Eine derartige Überblendung kann beispielsweise einen Streifen auf dem Display betreffen, dessen Höhe 20% der Gesamthöhe beträgt. Es ist selbstverständlich prinzipiell ebenso möglich, jeden anderen Bereich des Displays in einer geeigneten Größe hierfür vorzusehen. Beispielsweise kann für die Darstellung einer Zusatzinformation vorgesehen sein, dass diese in einem zentralen Bereich des Displays mit einer 80%igen Opazität dargestellt wird, so dass der ursprüngliche Inhalt noch leicht durchscheinend erkennbar ist. Hier ist eine Vielzahl von weiteren Möglichkeiten bekannt. Unabhängig von der gewählten Art der Darstellung einer Zusatzinformation kann das erfindungsgemäße Verfahren stets vorteilhaft für die Auswahl der darzustellenden Zusatzinformation beziehungsweise für die Auswahl einer besonders geeigneten Position eingesetzt werden.

Selbstverständlich können bei der endgültigen Entscheidung über das Einfügen und die Darstellung eines Werbespots beziehungsweise über die Auswahl einer geeigneten Position innerhalb eines Videostreams weitere Kriterien berücksichtigt werden, wie beispielsweise zeitlich fest vorgegebene Zeitfenster für Werbeblöcke, zeitliche Mindestabstände und/oder eine maximale Zeitdauer von Werbeblöcken, eine Zuordnung zu thematischen Inhalten - wird beispielsweise ein bestimmtes Produkt gezeigt, dann ist es in bekannter Weise möglich, einen diesbezüglichen Werbespot im Anschluss oder parallel zu einer solchen Szene einzufügen - sowie weitere, hier nicht explizit genannte, jedoch bereits bekannte Kriterien.

Diese bezüglich der Stimmungsinformationen optimierte Zuordnung kann insbesondere vollautomatisch durchgeführt werden. Das Ermitteln einer Stimmungsinformation in einer Videodatei und/oder in einer Zusatzinformation wird gemäß einer besonders vorteilhaften Ausführungsform unter Anwendung eines hierfür trainierten KI-Systems durchgeführt.

Hierbei wird zumindest ein zu untersuchender Abschnitt einer Videodatei einem KI-System übergeben. Das KI-System ist darauf trainiert zu erkennen, ob der mindestens eine zu untersuchende Abschnitt eine Stimmungsinformation aufweist, wobei diese Stimmungsinformation eine Grundstimmung aus einer vorgebbaren Menge von möglichen Grundstimmungen umfasst. Vorzugsweise ist das KI-System darüber hinaus darauf trainiert zu erkennen, an welcher Position und/oder in welchem Bereich innerhalb der Videodatei oder innerhalb des zu untersuchenden Abschnitts die mindestens eine Stimmungsinformation auffindbar ist.

Ein KI-System ist ein System, das die so genannte "künstliche Intelligenz" nutzt, um ein komplexes Problem zu lösen. Insbesondere Algorithmen, die ein Konzept verwirklichen, das als "Deep Learning" bekannt ist und einen Teilbereich der künstlichen Intelligenz darstellt, eignen sich für die Bearbeitung komplexer Daten, z. B. um eine gegebene Eingabe zu klassifizieren oder verschiedene Arten von Entscheidungen zu treffen, die auf der Auswertung von Daten beruhen.

Wenn das KI-System entsprechend trainiert ist, kann damit schnell und zuverlässig entschieden werden, ob der Inhalt eines Videos an einer bestimmten Stelle oder innerhalb eines bestimmten Bereiches eine Grundstimmung oder mehrere Grundstimmungen aus einer vorgebbaren Menge von möglichen Grundstimmungen aufweist. Aus diesen Informationen werden Stimmungsinformationen gebildet, die einen Vergleich dieser Stimmungsinformationen untereinander sowie den Stimmungsinformationen, die Zusatzinformationen zugeordnet sind, ermöglichen.

Gemäß einer möglichen Realisierung eines für die Ausführung des erfindungsgemäßen Verfahrens geeigneten KI-Systems basiert das KI-System auf einem künstlichen neuronalen Netz. Ein derartiges neuronales Netz besteht aus so genannten "Neuronen", von denen jedes eine mathematische Funktion mit Eingang und Ausgang abbildet, wobei der Ausgang eines Neurons als Eingang für ein oder mehrere nachfolgende Neuronen dient. Durch diese Anordnung entsteht ein Netz aus Neuronen, das in seiner Gesamtheit eine komplexe Funktion realisiert. Ein neuronales Netz und die zugehörigen Regeln, die einen Lernprozess definieren, können zum Beispiel mit TensorFlow entwickelt werden, einem Open-Source-Framework, das eine Softwarebibliothek mit Funktionen bereitstellt, die für die Erstellung schneller und zuverlässiger neuronaler Netze geeignet sind.

Das erfindungsgemäß trainierte KI-System kann sowohl die in einer Videodatei enthaltenen visuellen Informationen für das Identifizieren von Grundstimmungen bzw. das Erstellen von Stimmungsinformationen nutzen als auch die in einer Videodatei regelmäßig enthaltenen Audio-Informationen, wodurch die Qualität und Zuverlässigkeit der durch das erfindungsgemäße Verfahren bereitgestellten Stimmungsinformationen weiter verbessert werden kann. Hierfür kann das KI-System beispielsweise zwei Teil-Systeme umfassen, wobei ein Teilsystem die visuellen Daten analysiert und ein zweites Teil-System die Audio-Informationen hinsichtlich identifizierbarer Grundstimmungen untersucht und aus diesen beiden Teilinformationen unter Verwendung von Plausibilitätsprüfungen eine Folge von der Videodatei zugeordneten Stimmungsinformationen erzeugt.

Jede der innerhalb einer Videodatei erkannten Stimmungsinformationen sowie die den darzustellenden Zusatzinformationen zugeordneten Stimmungsinformationen kann beispielsweise als Wertepaar ausgebildet sein, wobei ein erster Wert eine Grundstimmung und ein zweiter Wert die Intensität der jeweiligen Grundstimmung beschreibt. Auf diese Weise ist ein Vergleich einzelner Stimmungsinformationen bzw. das Bestimmen von Ähnlichkeiten von einzelnen Stimmungsinformationen besonders einfach möglich. Selbstverständlich kann eine Stimmungsinformation eine Mehrzahl von Grundstimmungen umfassen, wobei vorzugsweise zu jeder Grundstimmung auch deren Intensität innerhalb der Stimmungsinformation codiert ist.

Die der Erfindung zugrundeliegende Aufgabe wird auch durch ein Client-Server System der eingangs genannten Art dadurch gelöst, dass das Client-Server System zur Durchführung des erfindungsgemäßen Verfahrens eingerichtet ist.

Weitere Merkmale und Vorteile der vorliegenden Erfindung werden nachfolgend unter Bezugnahme auf die Figuren näher erläutert. Es wird betont, dass einzelne in den Figuren gezeigte Merkmale auch für sich alleine erfindungswesentlich sein können, selbst wenn dies in den Figuren nicht gezeigt und in der Beschreibung nicht ausdrücklich erwähnt ist.

Ferner können die einzelnen in den Figuren gezeigten Merkmale miteinander kombiniert werden, selbst wenn diese Kombination in den Figuren nicht gezeigt und in der Beschreibung nicht ausdrücklich erwähnt ist. Es zeigen:
- Figur 1: ein Client-Server System gemäß einem ersten Ausführungsbeispiel;
- Figur 2: eine schematische Darstellung einer möglichen Realisierung einer Stimmungsinformation; und
- Figur 3: ein Ablaufdiagramm gemäß einer möglichen Ausführungsform

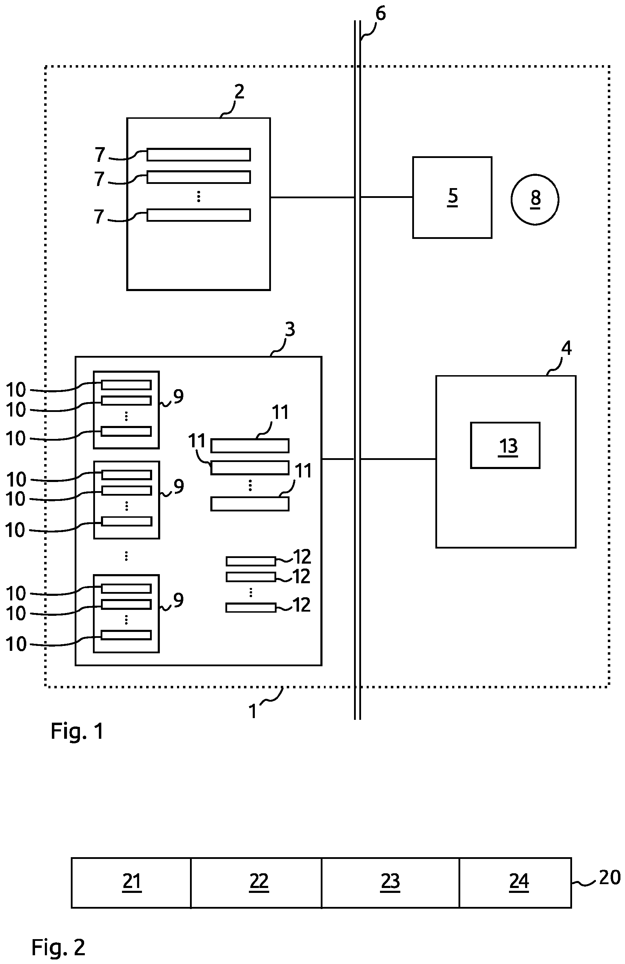

In Figur 1 ist ein Client-Server System 1 dargestellt, das einen ersten Server 2, einen zweiten Server 3, einen dritten Server 4 sowie einen Client 5 umfasst, die mittels eines Kommunikationsnetzwerkes, beispielsweise dem Internet 6, verbunden sind.

Auf dem Server 2 sind Videodateien 7 abgespeichert, die über das Internet 6 an den Client 5 in Form von Videostreams übertragen werden können. Der Client 5 ist beispielsweise ein Smart-TV, ein Laptop, ein Tablet, ein Smartphone oder ein anderes elektronisches Gerät, das einem Benutzer 8 zugeordnet ist und zum Empfang von Videodateien 7, die von dem Server 2 ausgestrahlt oder von dem Server 2 in Beantwortung einer von dem Client 5 an den Server 2 gesendeten Anforderung übermittelt werden, ausgebildet ist.

Der Server 3 ist beispielsweise als ein sogenannter Fileserver ausgebildet, auf dem Dateien von anderen Servern abgespeichert und von diesen oder anderen Servern wieder abgefragt werden können. In dem Server 3 sind in dem hier gezeigten Ausführungsbeispiel Datenstrukturen abgelegt, die beispielsweise als Listen 9 realisiert sein können. Jede Liste 9 ist einer Videodatei 7 zugeordnet und enthält eine oder mehrere Stimmungsinformationen 10. Der Server 3 umfasst ferner eine oder mehrere Zusatzinformationen 11 sowie Stimmungsinformationen 12, die jeweils einer der Zusatzinformationen 11 zugeordnet sind.

Der Server 4 umfasst ein KI-System 13, das zum Identifizieren von Stimmungsinformationen 10, 12 in Videodateien 7 und/oder Zusatzinformationen 11 trainiert ist. Das KI-System 13 ist vorzugsweise derart trainiert, dass es eine in einer Videodatei 7 auftretende Grundstimmung auch hinsichtlich der Intensität, mit der sie von einem Betrachter, beispielsweise dem Benutzer 8, wahrgenommen wird, bewerten kann.

Der Server 3 kann selbstverständlich ebenso als Teil des Servers 2 und/oder als Teil des Servers 4 ausgebildet und seinerseits mit weiteren Servern verbunden sein, um Informationen abzuspeichern, Zugriffsrechte zu verwalten, etc. Bei dem in Figur 1 gezeigten Ausführungsbeispiel handelt es sich lediglich um eine von einer Vielzahl von möglichen Realisierungen von Client-Server Systemen, die zur Ausführung des erfindungsgemäßen Verfahrens ausgebildet sind.

In Figur 2 ist eine Stimmungsinformation 20 beispielhaft dargestellt. Die Stimmungsinformation 20 umfasst eine Stimmungs-ID 21, einen Intensitätswert 22, eine Position 23 sowie einen Verweis 24. Die Stimmungs-ID 21 ermöglicht es, diese Stimmungsinformation einer vorgegebenen Grundstimmung zuzuordnen, die beispielsweise als 'liebevoll', 'romantisch', 'skurril', 'gewaltvoll', etc. beschrieben werden kann. Der Intensitätswert 22 gibt an, wie intensiv diese Grundstimmung in der betrachteten Szene ausgedrückt ist bzw. von einem Betrachter der Szene wahrgenommen wird. Die Position 23 bezeichnet eine Position innerhalb der Videodatei 7 bzw. der Zusatzinformation 11, an der diese Grundstimmung identifiziert worden ist. Die Position 23 kann beispielsweise ein Zeitstempel sein, der angibt, an welcher Position in der analysierten Videodatei 7 diese Grundstimmung erkannt worden ist. Die Position 23 könnte auch durch die Angabe eines Intervalls repräsentiert bzw. ergänzt sein, aus welcher hervorgeht, wann die Grundstimmung auftritt und wann sie nicht mehr nachweisbar ist.

Der Verweis 24 ist ein Verweis zu der korrespondierenden Videodatei 7 oder der Zusatzinformation 11, in der diese Stimmungsinformation 20 erkannt worden ist.

Selbstverständlich kann die Stimmungsinformation 20 weitere Einträge enthalten und ebenso selbstverständlich kann sie auch weniger Einträge enthalten. Gemäß der hier beschriebenen Ausführungsbeispiele ist von Bedeutung, dass die Stimmungsinformation 20 geeignet ist, eine innerhalb einer Videodatei 7 identifizierte Grundstimmung zu dokumentieren.

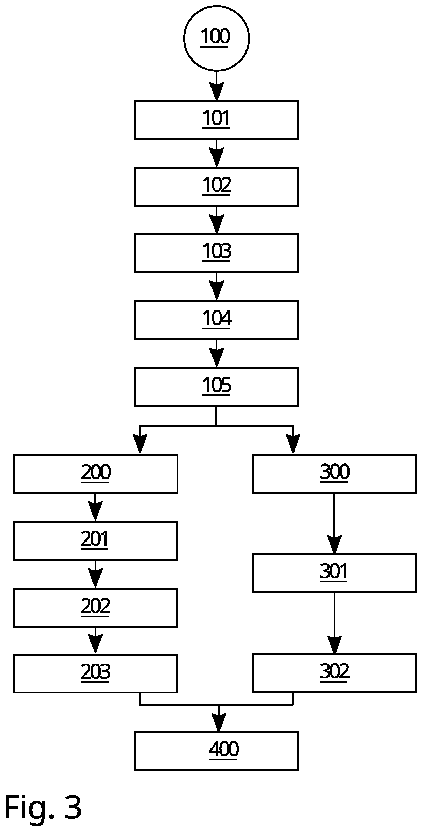

In Figur 3 ist ein Ablaufdiagramm dargestellt, das einzelne Schritte einer möglichen Ausführungsform des erfindungsgemäßen Verfahrens zeigt. Das Verfahren beginnt in einem Schritt 100.

In einem Schritt 101 wird eine Videodatei 7 einem KI-System 13 zugeführt, das darauf trainiert ist, in Videodaten 7 Grundstimmungen zu erkennen und entsprechende Informationen zu extrahieren.

In einem Schritt 102 analysiert das KI-System 13 die Videodatei 7 hinsichtlich darin identifizierbarer Grundstimmungen.

In einem Schritt 103 übergibt das KI-System die Ergebnisse der Analyse an eine weitere Funktionseinheit, die beispielsweise in dem Server 4 ausgebildet ist, die die Ergebnisse in einem Schritt 104 aufbereitet. Dies kann beispielsweise einen Prozess des Filterns umfassen, der bewirkt, dass nur diejenigen Ergebnisse berücksichtigt werden, bei denen eine Wahrscheinlichkeit des korrekten Erkennens über einem vorgebbaren Schwellwert liegt. Beispielsweise werden nur derartige von dem KI-System 13 generierte Ergebnisse berücksichtigt, bei denen die Wahrscheinlichkeit für ein korrektes Erkennen höher als 90% ist. Die hierfür notwendigen Daten werden von dem KI-System 13 zur Verfügung gestellt.

Das Aufbereiten in dem Schritt 104 kann ferner insbesondere das Konvertieren und Anordnen der von dem KI-System 13 erhaltenen Daten derart umfassen, dass die darin enthaltenen relevanten Informationen in Form von Stimmungsinformationen 10, 12, 20 mit anderen Stimmungsinformationen 10, 12, 20 vergleichbar sind.

In einem Schritt 105 werden die in dem Schritt 104 erzeugten Stimmungsinformationen 10, 12, 20 in geeigneter Weise und an einem geeigneten Ort abgespeichert. Dies kann ein in dem Server 4 vorgesehener Speicherbereich sein, es kann aber beispielsweise auch ein Fileserver verwendet werden, wie er in Figur 1 als Server 3 gezeigt ist.

Wenn die Stimmungsinformationen 10, 12, 20 vorliegen, sind mehrere unterschiedliche Szenarien möglich, die einzeln oder gemeinsam ausgeführt werden können und jeweils das erfindungsgemäße Verfahren realisieren. In Figur 3 sind zwei der Möglichkeiten in parallelen Teildiagrammen exemplarisch gezeigt.

Eine Möglichkeit der weiteren Ausführung besteht darin, dass für eine bestimmte Zusatzinformation 11, beispielsweise ein bestimmter Werbespot, eine geeignete Position für eine Darstellung innerhalb eines bestimmten Videostreams 7 gewählt werden soll. In diesem Fall wird in einem Schritt 200 die Stimmungsinformation 12 der bestimmten Zusatzinformation 11 von dem Server 3 angefordert. In einem Schritt 201 wird diese Stimmungsinformation 12 mit den Stimmungsinformationen 10 vergleichen, die mittels des KI-Systems 13 in der Videodatei 7, in welcher die Zusatzinformation 11 dargestellt werden soll, erkannt wurden.

In einem Schritt 202 wird diejenige Position innerhalb der Videodatei 7 bestimmt, deren zugeordnete Stimmungsinformation 10 identisch oder am ähnlichsten ist zu der Stimmungsinformation 12, die dem Werbespot zugeordnet ist, der in die Videodatei 7 während der Übertragung als Videostream eingegfügt oder parallel zu der Darstellung der Videodatei 7 angezeigt werden soll.

In einem Schritt 203 wird in Abhängigkeit von dem Ergebnis des Schrittes 202 eine Position innerhalb der Videodatei 7 für das Einfügen oder parallele Darstellen des Werbespots bestimmt, die beispielsweise am Ende derjenigen Szene in der Videodatei 7 gewählt wird, deren zugeordnete Stimmungsinformation 10 in dem Schritt 202 als am ähnlichsten zu der Stimmungsinformation 12 des Werbespots erkannt wurde.

In einem Schritt 400 wird die Videodatei 7 in Form eines Videostreams an den Client 5 übertragen. Dies kann in Abhängigkeit von einer Anforderung der Videodatei 7 durch den Client 5 bzw. den Benutzer 8 erfolgen oder auf dem Wege eines sogenannten Broadcast, bei welchem Videostreams beispielsweise in Form einer TV-Sendung zu einer vorgegebenen Zeit über das Internet 6 ausgestrahlt' und von dem Client 5 empfangen werden.

Eine weitere Möglichkeit des Ablaufs des erfindungsgemäßen Verfahrens, nachdem die Stimmungsinformationen 10, 12, 20 nach Abarbeitung des Schrittes 105 vorliegen, geht davon aus, dass eine Mehrzahl von Zusatzinformationen 11 für das Einfügen in einen Videostream oder das parallele Darstellen bspw. als Überblendung bereitstehen und entschieden werden soll, welche dieser Zusatzinformationen - gegebenenfalls an einer bestimmten Position - dargestellt werden soll.

Hier wird in einem Schritt 300 die Stimmungsinformation 10 der Videodatei 7 herangezogen, deren Position möglichst nahe vor der Position ist, an der die Zusatzinformation 11 eingefügt werden soll. Vorzugsweise gehört diese Stimmungsinformation 10 zu einer Szene, die einer geplanten Werbeunterbrechung, innerhalb derer die auszuwählende Zusatzinformation 11 darzustellen ist, unmittelbar vorangeht.

In einem Schritt 301 werden die Stimmungsinformationen 12, die den zur Auswahl stehenden Zusatzinformationen 11 zugeordnet sind, mit der in dem Schritt 300 bestimmten Stimmungsinformation 10 hinsichtlich deren Identität und/oder Ähnlichkeit verglichen.

In einem Schritt 302 wird diejenige Zusatzinformation 11 für eine Darstellung ausgewählt, deren Stimmungsinformation 12 in dem Schritt 301 als identisch oder am ähnlichsten zu der Stimmungsinformation 10 derjenigen Szene in der Videodatei 7, die der geplanten Werbepause vorangeht, erkannt wurde.

Das Verfahren wird dann ebenfalls in dem Schritt 400 fortgesetzt, in welchem die Videodatei 7 in Form eines Videostreams an den Client 5 übertragen wird, wobei die in dem Schritt 302 ausgewählte Zusatzinformation 11 in den Videostream an der vorgesehenen Stelle eingefügt wird.

Eine Vielzahl weiterer Aufgabenstellungen und Abläufe unter Verwendung des erfindungsgemäßen Verfahrens sind möglich. Beispielsweise kann vorgesehen sein, eine Menge von Werbespots, die innerhalb eines bestimmten Zeitraums ausgestrahlt werden sollen, derart auf eine Mehrzahl von zu übertragenden Videostreams zu verteilen, dass jeder Werbespot in denjenigen Videostream eingefügt wird, an dem für die zugeordnete Stimmungsinformation 12 die größtmögliche Ähnlichkeit zu einer Stimmungsinformation 10 besteht, deren Position möglichst unmittelbar vor der Position ist, an der der Werbespot darzustellen ist. Es ist vorstellbar, aufgrund der ermittelten Ähnlichkeiten zwischen den den Werbespots zugeordneten Stimmungsinformationen 12 und den Stimmungsinformationen 10, die den Videodateien 7 zugeordnet sind, eine Matrix zu erstellen, in der diese Ähnlichkeiten eingetragen sind und es kann dann entschieden werden, welcher Werbespot in welcher Videodatei an welcher Position eingefügt wird. Selbstverständlich besteht keine Notwendigkeit, diese Matrix explizit zu erstellen. Es genügt, wenn die jeweils besten 'Matches' für die Zuteilung der Werbespots zu den möglichen Positionen herangezogen werden, gegebenenfalls unter Anwendung weiterer Kriterien wie beispielsweise ein grundlegendes Genre der Videodatei 7 sowie der darzustellenden Werbespots, Profilinformationen der Benutzer 8, eine aktuelle Uhrzeit etc., die in bekannter Weise berücksichtigt werden.

Weitere Abläufe sind auf Basis des erfindungsgemäßen Verfahrens vorstellbar und für den Fachmann realisierbar, die das Ziel haben, Webespots hinsichtlich deren Stimmung möglichst ,weich' in die zu übertragenden Videodateien 7 einzufügen beziehungsweise parallel in Form einer Überblendung oder auf einem anderen Gerät darzustellen. Insbesondere ist es möglich, eine Folge von unmittelbar aufeinander folgenden Werbespots, die innerhalb eines Werbeblocks gezeigt werden sollen, hinsichtlich ihrer Stimmung zu 'sortieren', so dass ein harmonischer und weicher Übergang der Grundstimmungen der einzelnen Werbespots, die beim Betrachten wahrgenommen werden, erfolgt und die Stimmungsinformation 12 des letzten Werbespots in der Folge vorzugsweise seinerseits eine ausreichende Ähnlichkeit zu der Stimmungsinformation 10 derjenigen Szene in der Videodatei 7, die der Werbepause folgt, aufweist. Somit wird erreicht, dass sich ein gesamter Werbeblock harmonisch beim Betrachten der Videodatei 7 durch den Benutzer 8 einfügt.

## Patentansprüche

1. Verfahren zur Auswahl einer Zusatzinformation (11) und/oder einer Position in einer Videodatei (7) für die Darstellung einer Zusatzinformation (11), **dadurch gekennzeichnet, dass**
- der Zusatzinformation (11) mindestens eine erste Stimmungsinformation (12) zugeordnet ist;
- der Inhalt der Videodatei (7) zumindest teilweise hinsichtlich des Auftretens von mindestens einer weiteren Stimmungsinformation (10; 20) untersucht wird; und
- eine Auswahl der darzustellenden Zusatzinformation (11) und/oder eine Auswahl einer Position zur Darstellung einer Zusatzinformation (11) in Abhängigkeit von dem Auftreten der weiteren Stimmungsinformation (10; 20) erfolgt.

2. Verfahren nach Anspruch 1, **dadurch gekennzeichnet, dass** mindestens eine Stimmungsinformation (10, 12; 20) die Identifikation (21) mindestens einer Grundstimmung und eine Aussage über die Intensität (22) dieser Grundstimmung umfasst.

3. Verfahren nach einem der vorangegangenen Ansprüche, wobei eine Mehrzahl von Zusatzinformationen (11) für eine mögliche Darstellung bei einem Benutzer (8) innerhalb oder parallel zu einer Darstellung der Videodatei (7) zur Auswahl stehen, **dadurch gekennzeichnet, dass**
- mehreren Zusatzinformationen (11) jeweils mindestens eine Stimmungsinformation (12) zugeordnet ist;
- die den Zusatzinformationen (11) zugeordneten Stimmungsinformationen (12) mit der in der Videodatei (7) ermittelten mindestens einen weiteren Stimmungsinformation (10; 20) vergleichen werden; und
- zumindest diejenige Zusatzinformation (11) für eine Darstellung bei einem Benutzer (8) ausgewählt wird, deren Stimmungsinformation (12) mit der mindestens einen weiteren Stimmungsinformation (10; 20) übereinstimmt oder dieser am ähnlichsten ist.

4. Verfahren nach einem der vorangehenden Ansprüche, **dadurch gekennzeichnet, dass**
- eine Mehrzahl von Stimmungsinformationen (10; 20) mit den jeweiligen Positionen ihres Auftretens innerhalb der Videodatei (7) ermittelt werden;
- mindestens eine Zusatzinformationen (11) vorliegt, der mindestens eine Stimmungsinformation (12) zugeordnet ist;
- die mindestens eine der mindestens einen Zusatzinformation (11) zugeordnete Stimmungsinformation (12) mit den in der Videodatei (7) ermittelten Stimmungsinformationen (10; 20) vergleichen wird; und
- die Zusatzinformation (11) in Abhängigkeit von derjenigen Position der Stimmungsinformation (10; 20) innerhalb der Videodatei (7) dem Benutzer dargestellt wird, deren Stimmungsinformation (10; 20) mit der mindestens einen der Zusatzinformation (11) zugeordneten Stimmungsinformation (12) übereinstimmt oder dieser am ähnlichsten ist.

5. Verfahren nach einem der vorangehenden Ansprüche, wobei eine Darstellung einer Mehrzahl von unmittelbar aufeinanderfolgenden Zusatzinformationen (11) vorgesehen ist, **dadurch gekennzeichnet, dass** die letzte der unmittelbar aufeinander folgenden Zusatzinformationen (11) so ausgewählt wird, dass die ihr zugeordnete Stimmungsinformation (12) eine größte Ähnlichkeit zu derjenigen Stimmungsinformation (10; 20) in der Videodatei (7) aufweist, die dieser letzten der unmittelbar aufeinander folgenden Zusatzinformationen (11) folgt.

6. Verfahren nach einem der vorangehenden Ansprüche, wobei eine Darstellung einer Mehrzahl von unmittelbar aufeinanderfolgenden Zusatzinformationen (11) in einem Block vorgesehen ist, **dadurch gekennzeichnet, dass** eine Sortierung der unmittelbar aufeinanderfolgend darzustellenden Zusatzinformationen (11) innerhalb dieses Blockes derart durchgeführt wird, dass
- eine der ersten darzustellenden Zusatzinformation (11) zugeordnete Stimmungsinformation (12) eine größte Ähnlichkeit zu einer in der Videodatei (7) dem Block vorausgehenden Stimmungsinformation (10; 20) aufweist;
- eine der letzten Zusatzinformation (11) zugeordnete Stimmungsinformation (12) eine größte Ähnlichkeit zu einer in der Videodatei (7) dem Block nachfolgenden Stimmungsinformation (10; 20) aufweist; und
- falls eine oder mehrere weitere Zusatzinformationen (11) für eine Darstellung nach der ersten und vor der letzten Zusatzinformation (11) innerhalb dieses Blocks vorgesehen sind, diese Zusatzinformationen (11) derart sortiert sind, dass eine der jeweiligen Zusatzinformation (11) zugeordnete Stimmungsinformation (12) die größte Ähnlichkeit zu der der jeweils vorangehenden und/oder nachfolgenden Zusatzinformation (11) zugeordneten Stimmungsinformation (12) hat.

7. Verfahren nach einem der vorangehenden Ansprüche, **dadurch gekennzeichnet, dass** zumindest ein zu untersuchender Abschnitt einer Videodatei (7) einem KI-System (13) übergeben wird, wobei das KI-System (13) darauf trainiert ist zu erkennen, ob der mindestens eine zu untersuchende Abschnitt eine Stimmungsinformation (10; 20) aufweist, und wobei diese Stimmungsinformation (10; 20) eine Grundstimmung aus einer vorgebbaren Menge von möglichen Grundstimmungen bezeichnet.

8. Verfahren nach Anspruch 7, **dadurch gekennzeichnet, dass** das KI-System (13) darauf trainiert ist zu erkennen, an welcher Position und/oder in welchem Bereich innerhalb der Videodatei (7) oder innerhalb des zu untersuchenden Abschnitts in der Videodatei (7) die mindestens eine Stimmungsinformation (10; 20) auffindbar ist.

9. Client-Server System (1), wobei das Client-Server System (1) mit einem Kommunikationsnetzwerk, insbesondere dem Internet (6), verbindbar ist, **dadurch gekennzeichnet, dass** auf dem Client-Server System (1) ein Verfahren nach einem der Ansprüche 1 bis 8 ausführbar ist.
